# FASCICULE DE BREVET EUROPEEN

(11) **EP 1 002 565 B1**
(45) Date de publication et mention de la délivrance du brevet: **03.11.2004**
(21) Numéro de dépôt: 99402831.4
(22) Date de dépôt: 16.11.1999
(51) Int. Cl.: B01D 53/22, B01D 53/04

(54) **Installation de séparation de gaz et utilisation d'une telle installation pour la production d'un gaz**
Gastrennungsanlage und Verwendung dieser Anlage zur Gasherstellung
Gas separation installation and use of such installation for gas production

(30) Priorité: 17.11.1998 FR 9814402
(43) Date de publication de la demande: 24.05.2000
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Barry, Lionel, 94220 Charenton le Pont (FR); Goeler, Patrice, 94700 Maisons Alfort (FR)
(74) Mandataire: Conan, Philippe Claude

(56) Documents cités:
- GB-A- 2 222 535
- US-A- 5 388 413
- US-A- 5 688 306

## Description

La présente invention concerne des installations de séparation non cryogénique de gaz, du type comprenant, en série, une unité de compression d'un mélange gazeux à séparer, au moins un dispositif de séparation de particules liquides éventuellement présentes dans le mélange gazeux, et au moins un module de séparation de gaz du mélange gazeux.

Un exemple d'installation de ce type, mettant en oeuvre un module de séparation membranaire, est décrit dans le document EP-A-0588705, au nom de la Demanderesse.

On sait que les composants de modules de séparation non cryogéniques, qui sont alimentés en mélange gazeux à des températures supérieures à l'ambiante, que ce soit les adsorbants ou les membranes de perméation sont très sensibles à des traces d'impuretés véhiculées dans le mélange gazeux séparé, en particulier sous leur forme liquide. Pour éviter que des gouttelettes de liquide n'atteignent les modules, on prévoit, comme décrit par exemple dans le document sus-mentionné, une chaîne complète de traitement du mélange gazeux à séparer comprenant, dans la pratique, une série de filtres dédiés et, pour les membranes, le chauffage au moins aval de la ligne d'amenée de mélange gazeux au module de séparation. L'existence d'une telle chaîne sophistiquée de traitement du mélange gazeux ne permet toutefois pas d'éviter totalement des pollutions accidentelles des modules de séparation par du liquide, par exemple en cas de perçage d'un échangeur huile/air associé au compresseur, de saturation anticipée d'un filtre, ou de défaut ou dérèglement du dispositif de chauffage, ce qui entraîne en général l'obligation de remplacer rapidement les modules de séparation, avec les coûts directs et indirects correspondants.

La présente invention a pour objet de proposer une installation du type précité permettant, avec des moyens simples, efficaces et peu onéreux, d'éviter les inconvénients sus-mentionnés.

Pour ce faire, l'invention propose une installation selon la revendication 1.

Le document US-A-5388413 décrit une installation de séparation non-cryogénique de gaz où le système de purge de liquide du dispositif de séparation de particules liquides comporte un bac récepteur pourvu d'un détecteur de niveau de liquide permettant l'actionnement d'une vanne de vidange.

Selon d'autres caractéristiques plus particulières de l'invention :
- le signal de sortie est exploitable pour actionner un système d'alarme et/ou une unité centrale de commande de l'installation, sur site et/ou à distance
- le détecteur de gouttelettes liquides est du type optronique
- le dispositif de séparation de particules liquides comporte une purge et le détecteur de liquide est relié à la purge
- le dispositif de filtration pourvu d'un détecteur est un filtre à coalescence fin disposé immédiatement en amont du module à membrane.
- le module de séparation est du type à adsorption
- le module de séparation est du type à peméation

La présente invention a également pour objet une utilisation d'une telle installation de séparation de gaz pour la production d'au moins un gaz présent dans un mélange gazeux.

La présente invention concerne également un procédé de séparation non-cryogénique de gaz selon la revendication 12.

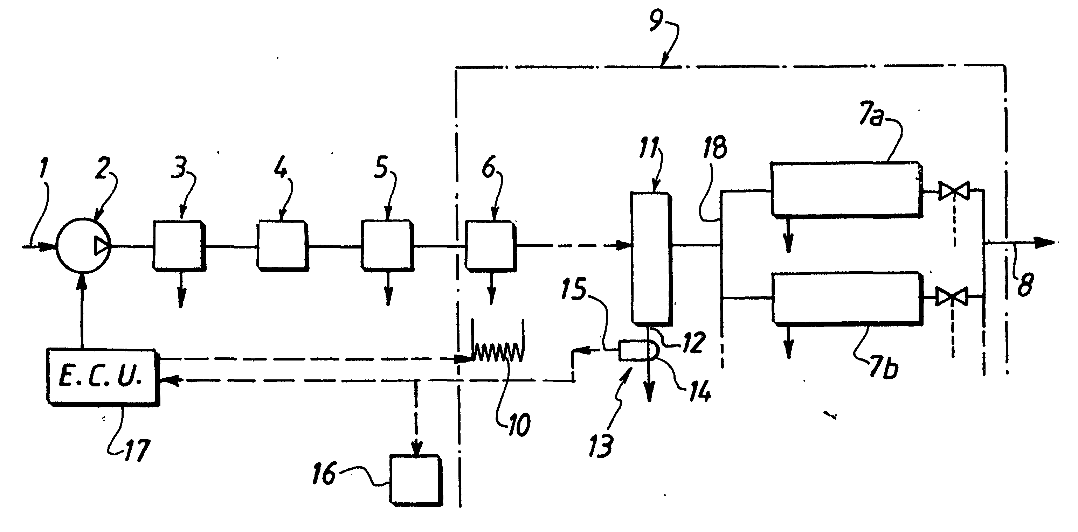

D'autres caractéristiques et avantages de la présente invention ressortiront de la description suivante d'un mode de réalisation, donnée à titre illustratif mais nullement limitatif, faite en relation avec le dessin annexé sur lequel :
- la figure unique représente schématiquement une installation de séparation de gaz, du type à membrane de perméation, selon l'invention.

Sur la figure, on reconnaît une ligne de séparation d'un mélange gazeux introduit en 1 à l'entrée d'une unité de compression 2. Le mélange gazeux comprimé passe ensuite successivement dans un poste de séparation, de l'huile éventuellement présente dans le mélange comprimé 3, dans un poste de refroidissement 4, dans un poste de séparation d'eau 5, dans un préfiltre coalesceur 6 pour atteindre une batterie de modules à membranes en parallèle 7a, 7b etc .. débitant dans une ligne de production 8 vers au moins un poste utilisateur (non représenté). Comme décrit dans le document sus-mentionné, au moins la partie aval de la ligne de production, incluant les modules à membranes 7 et leur collecteur d'alimentation 18, est enclose dans au moins une enceinte thermostatée 9 chauffée par des moyens de chauffage intégrés 10 pilotés, ainsi que l'unité de compression et les vannes de l'installation, par une unité centrale de commande et de surveillance 17.

Dans le mode de réalisation représenté de l'invention, juste en amont de la batterie de modules à membranes 7 est disposé un filtre 11 avantageusement pourvu d'une sortie de purge 12 à laquelle est connecté le circuit de fluide d'un détecteur de liquide 13 détectant toutes apparitions de gouttelettes de liquide s'accumulant dans le filtre 11 et permettant ainsi une action avant que ces gouttelettes de liquide ne s'accumulent dans les modules de séparation 7 et ne viennent en perturber leur fonctionnement. En variante, le détecteur de présence de liquide 13 peut être disposé au voisinage du point le plus bas du collecteur alimentant le ou les modules de séparation 7.

Avantageusement, comme représenté sur la figure unique, le détecteur de gouttelettes de liquide 13 est du type optronique avec un dôme de détection 14 à réflexion de signal interne, et dont l'indice de réfraction est modifié par l'apparition de film de liquide sur la paroi extérieure du dôme tel que commercialisé par exemple par la Société Honeywell sous le nom Série LLN. Ce détecteur 13 fournit un signal de sortie 15 permettant d'actionner, immédiatement ou avec temporisation et confirmation d'état humide, au moins un dispositif d'alarme sur site 16, et typiquement un dispositif répondeur d'alarme au niveau du centre de télésurveillance de l'installation, et se rebouclant sur l'unité centrale de commande 17 et au centre de télésurveillance, pour permettre de couper instantanément l'unité de compression 2 et de commuter le poste utilisateur sur une source de réserve de gaz de production (non représentée).

L'installation ci-dessus trouve une application préférée dans la production d'un gaz ou un mélange de ce gaz avec des traces d'autres gaz, à partir d'un mélange gazeux à séparer, typiquement pour la production d'azote impur à partir d'un mélange gazeux constitué d'air atmosphérique ou de gaz de récupération de procédé. Dans ce cas, le dispositif de filtration aval 11 associé au détecteur de liquide 13 sera typiquement un filtre à coalescence de grade 0,01 µm disposé tout en aval de la chaîne de filtration.

Quoique la présente invention ait été décrite en relation avec un mode de réalisation et une utilisation particuliers, elle ne s'en trouve pas limitée mais est susceptible de modifications et de variantes qui apparaîtront à l'homme de l'art dans le cadre défini par les revendications ci-après. En particulier, elle concerne également les installations de séparation de gaz par adsorption sur des matériaux particulaires adsorbants en couches épaisses ou en couches minces, notamment du type à variations de pression, dits PSA, pour l'épuration d'air ou la production d'oxygène ou d'hydrogène. Les dispositifs de séparation de particules liquides peuvent également être de type dynamique, tels que cyclones ou à variation de section de conduite d'amenée de gaz

## Revendications

1. Installation de séparation non cryogénique de gaz, comprenant, en série, une unité (2) de compression d'un mélange gazeux à séparer, au moins un dispositif (3,5,11) de séparation de particules liquides du mélange gazeux à séparer, et au moins un module de séparation de gaz (7a,7b), **caractérisée en ce qu'**elle comporte un détecteur (13) d'apparition de gouttelettes de liquide dans le dispositif de séparation de particules liquides (11) fournissant un signal de sortie (15) en cas d'apparition de gouttelettes.

2. Installation selon la revendication 1, **caractérisée en ce qu'**elle comprend une unité centrale de commande (17) recevant le signal de sortie (15).

3. Installation selon la revendication 1 ou la revendication 2, **caractérisée en ce qu'**elle comprend un système d'alarme (16) actionné par le signal de sortie (15).

4. Installation selon l'une des revendications précédentes, **caractérisée en ce que** le détecteur (13) est du type optronique.

5. Installation selon l'une des revendications précédentes, **caractérisée en ce que** le détecteur (13) est disposé au voisinage du point bas du collecteur (18) alimentant le module de séparation (7) en mélange gazeux à séparer.

6. Installation selon l'une des revendications 1 à 4, **caractérisée en ce que** le dispositif de séparation de particules liquides (11) pourvu du détecteur (13) est un filtre à coalescence disposé immédiatement en amont du module de séparation (7a, 7b).

7. Installation selon l'une des revendications 1 à 4, **caractérisée en ce que** le détecteur (13) est disposé dans une sortie de purge (12) du dispositif de séparation de particules liquides (11).

8. Installation selon l'une des revendications précédentes, **caractérisée en ce que** le module de séparation de gaz est du type à membrane de perméation (7a, 7b).

9. Installation selon l'une des revendications 1 à 7, **caractérisée en ce que** le module de séparation de gaz est du type à adsorption.

10. Utilisation d'une installation selon l'une des revendications précédentes pour la production d'au moins un gaz présent dans un mélange gazeux.

11. Utilisation selon la revendication 10, **caractérisée en ce que** le mélange gazeux est de l'air.

12. Procédé de séparation non-cryogénique d'un gaz, comprenant les étapes de comprimer le gaz et de faire passer le gaz comprimé dans un dispositif de séparation de particules liquides dans le gaz puis dans un module de séparation de gaz, **caractérisé, en ce qu'**il comprend l'étape de détecter l'apparition de gouttelettes de liquide dans le dispositif et de fournir un signal de sortie en cas de détection d'apparition de gouttelettes.

## Patentansprüche

1. Anlage zur Gastrennung ohne Tiefsttemperaturen, die in Reihe geschaltet eine Einheit (2) zur Kompression eines zu trennenden Gasgemischs, zumindest eine Vorrichtung (3, 5, 11) zur Abtrennung von flüssigen Teilchen aus dem zu trennenden Gasgemisch und zumindest ein Gastrennungsmodul (7a, 7b) umfasst, **dadurch gekennzeichnet, dass** sie einen Detektor (13) für das Auftreten von Flüssigkeitströpfchen in der Vorrichtung zur Abtrennung von flüssigen Teilchen (11) umfasst, der im Fall des Auftretens von Tröpfchen ein Ausgangssignal (15) abgibt.

2. Anlage nach Anspruch 1, **dadurch gekennzeichnet, dass** sie eine zentrale Steuereinheit (17) umfasst, die das Ausgangssignal (15) empfängt.

3. Anlage nach Anspruch 1 oder Anspruch 2, **dadurch gekennzeichnet, dass** sie ein Warnsystem (16) umfasst, das durch das Ausgangssignal (15) betätigt wird.

4. Anlage nach einem der vorhergehenden Ansprüche, **dadurch gekennzeichnet, dass** der Detektor (13) von optronischer Art ist.

5. Anlage nach einem der vorhergehenden Ansprüche, **dadurch gekennzeichnet, dass** der Detektor (13) in der Nachbarschaft des Tiefpunktes des Kollektors (18) angeordnet ist, der das Trennungsmodul (7) mit dem zu trennenden Gasgemisch speist.

6. Anlage nach einem der Ansprüche 1 bis 4, **dadurch gekennzeichnet, dass** die mit dem Detektor (13) versehene Vorrichtung (11) zur Abtrennung von flüssigen Teilchen ein unmittelbar stromaufwärts von dem Trennungsmodul (7a, 7b) angeordnetes Koaleszenzfilter ist.

7. Anlage nach einem der Ansprüche 1 bis 4, **dadurch gekennzeichnet, dass** der Detektor (13) in einem Entleerungsauslass (12) der Vorrichtung (11) zur Abtrennung von flüssigen Teilchen angeordnet ist.

8. Anlage nach einem der vorhergehenden Ansprüche, **dadurch gekennzeichnet, dass** das Gastrennungsmodul von der Art mit Permeationsmembran (7a, 7b) ist.

9. Anlage nach einem der Ansprüche 1 bis 7, **dadurch gekennzeichnet, dass** das Gastrennungsmodul von der Art mit Adsorption ist.

10. Verwendung einer Anlage nach einem der vorhergehenden Ansprüche für die Produktion zumindest eines in einem Gasgemisch vorhandenen Gases.

11. Verwendung nach Anspruch 10, **dadurch gekennzeichnet, dass** das Gasgemisch Luft ist.

12. Verfahren zur Gastrennung ohne Tiefsttemperaturen, das die Schritte des Komprimierens des Gases und des Durchleitens des komprimierten Gases durch eine Vorrichtung zur Abtrennung von flüssigen Teilchen in dem Gas und dann durch ein Gastrennungsmodul umfasst, **dadurch gekennzeichnet, dass** es den Schritt des Erfassens des Auftretens von Flüssigkeitströpfchen in der Vorrichtung und des Bereitstellens eines Ausgangssignals im Falle des Erfassens des Auftretens von Tröpfchen umfasst.

## Claims

1. Non-cryogenic gas separation plant comprising, in series, a unit (2) for compressing a gas mixture to be separated, at least one device (3,5,11) for separating liquid particles in the gas mixture to be separated, and at least one gas separation module (7a,7b), **characterized in that** it includes a detector (13) for detecting the appearance of liquid droplets in the liquid-particle separation device (11), which delivers an output signal (15) in the event of droplets appearing.

2. Plant according to Claim 1, **characterized in that** it comprises a central control unit (17) receiving the output signal (15).

3. Plant according to Claim 1 or Claim 2, **characterized in that** it comprises an alarm system (16) actuated by the output signal (15).

4. Plant according to one of the preceding claims, **characterized in that** the detector (13) is of the optronic type.

5. Plant according to one of the preceding claims, **characterized in that** the detector (13) is placed near the low point of the manifold (18) feeding the separation module (7) with the gas mixture to be separated.

6. Plant according to one of Claims 1 to 4, **characterized in that** the liquid-particle separation device (11) provided with the detector (13) is a coalescence filter placed immediately upstream of the separation module (7a, 7b).

7. Plant according to one of Claims 1 to 4, **characterized in that** the detector (13) is placed in a purge outlet (12) of the liquid-particle separation device (11).

8. Plant according to one of the preceding claims, **characterized in that** the gas separation module is of the permeation-membrane type (7a, 7b).

9. Plant according to one of Claims 1 to 7, **characterized in that** the gas separation module is of the adsorption type.

10. Use of a plant according to one of the preceding claims for producing at least one gas present in a gas mixture.

11. Use according to Claim 10, **characterized in that** the gas mixture is air.

12. Process for the non-cryogenic separation of a gas, comprising the steps of compressing the gas and of passing the compressed gas into a device for separating liquid particles in the gas and then into a gas separation module, **characterized in that** it includes the step of detecting the appearance of liquid droplets in the device and of delivering an output signal in the event of the appearance of droplets being detected.
